# EUROPÄISCHE PATENTSCHRIFT

(11) **EP 3 894 234 B1**
(45) Veröffentlichungstag und Bekanntmachung des Hinweises auf die Patenterteilung: **08.03.2023**
(21) Anmeldenummer: 19828208.9
(22) Anmeldetag: 06.12.2019
(51) Int. Cl.: B60B 27/00, F16D 65/18, B60B 27/04, B60B 35/12

(54) **BREMSSYSTEM MIT MEHREREN DRUCKKOLBEN FÜR EINE ELEKTRISCHE RADANTRIEBSEINHEIT; SOWIE RADANTRIEBSEINHEIT**
MULTI-PISTON BRAKE SYSTEM FOR A ELECTRIC DRIVE HUB, AND ELECTRIC DRIVE HUB WITH SUCH A BRAKE SYSTEM
SYSTÈME DE FREINAGE MULTI-PISTON POUR MOYEU DER ROUE AVEC MOTEUR ÉLECTRIQUE ET MOYEU DER ROUE AVEC MOTEUR ÉLECTRIQUE AVEC UN TEL SYSTÈME DE FREINAGE

(30) Priorität: 12.12.2018 DE 102018131876
(43) Veröffentlichungstag der Anmeldung: 20.10.2021
(73) Patentinhaber: Schaeffler Technologies AG & Co. KG, 91074 Herzogenaurach (DE)
(72) Erfinder: WIMMER, Doris Maria, 77883 Ottenhöfen (DE); ORTMANN, Simon, 76532 Baden-Baden (DE); WAGNER, Philippe, 67460 Souffelweyersheim (FR)
(86) Internationale Anmeldenummer: PCT/DE2019/101051
(87) Internationale Veröffentlichungsnummer: WO 2020/119859

(56) Entgegenhaltungen:
- WO-A1-2014/168034
- DE-A1- 19 732 637
- US-A- 3 812 928

## Beschreibung

Die Erfindung betrifft ein Bremssystem für eine elektrische Radantriebseinheit, insbesondere eine radintegrierte Radantriebseinheit (Radnabenantrieb) für ein vorzugsweise zwei-, drei- oder vierrädriges Kraftfahrzeug. Des Weiteren betrifft die Erfindung eine elektrische Radantriebseinheit mit diesem Bremssystem.

Hinsichtlich elektrischer Antriebe besteht bei elektrischen Radnabenantrieben der Bedarf einer möglichst kompakten Integration der Antriebsbestandteile mit einem entsprechenden Bremssystem. Des Weiteren ist ein möglichst einfacher Aufbau gewünscht, um den Herstellungs- und Montageaufwand einfach zu halten. Bei den umgesetzten Ausführungen sollen die Bestandteile aufgrund der relativ hohen Massen entsprechend robust umgesetzt sein.

Aus der US 3 812 928 A ist ein Bremssystem für eine elektrische Radantriebseinheit bekannt, welche den nächstliegenden Stand der Technik bildet. In jener Druckschrift ist ein mit einem Gehäuse verbundenen erster Bremsbestandteil und ein relativ zum Gehäuse drehbar gelagerter zweiter Bremsbestandteil offenbart, sowie eine hydraulische Betätigungseinrichtung. Ein Druckkolben der Betätigungseinrichtung ist in radialer Richtung in Bezug auf eine Drehachse des zweiten Bremsbestandteils innerhalb von Bremsscheibenelementen angeordnet und ein mindestens einen Druckkolben mit einem der Bremsscheibenelemente verschieblich koppelndes Schiebeelement ist sowohl in der radialen als auch in der axialen Richtung der Drehachse angeordnet. Weiterer Stand der Technik ist in der WO 2014/168034 A1 offenbart.

Es ist daher die Aufgabe der vorliegenden Erfindung, ein Bremssystem für eine elektrische Radantriebseinheit zur Verfügung zu stellen, das im Aufbau mit möglichst wenigen einzelnen Bestandteilen in möglichst wenigen Montageschritten montierbar ist, wobei gleichzeitig ein kompakter und robuster Aufbau gewährleistet ist.

Dies wird erfindungsgemäß durch den Gegenstand des Anspruchs 1 gelöst. Demnach ist ein Bremssystem für eine elektrische Radantriebseinheit (auch als Radnabenantriebseinheit bezeichnet) mit einem fahrzeugrahmenfest anbringbaren Gehäuse, welches Gehäuse einen Flanschbereich sowie einen an dem Flanschbereich befestigten, wellenartigen Radträgerbereich aufweist, einem mit dem Gehäuse verbundenen ersten Bremsbestandteil, wobei der erste Bremsbestandteil ein unmittelbar an einer radialen Außenseite des Radträgerbereiches angebrachtes erstes Tragteil sowie ein drehfest mit dem ersten Tragteil verbundenes erstes Bremsscheibenelement aufweist, einem relativ zu dem Gehäuse drehbar gelagerten zweiten Bremsbestandteil, wobei der zweite Bremsbestandteil ein zweites Tragteil sowie ein drehfest mit dem zweiten Tragteil verbundenes, zum reibkraftschlüssigen Verbund mit dem ersten Bremsscheibenelement angeordnetes und ausgebildetes, zweites Bremsscheibenelement aufweist, sowie einer hydraulischen, mit einem oder mehreren Druckkolben ausgestatteten Betätigungseinrichtung versehen ist, wobei die Betätigungseinrichtung derart angeordnet ist, dass der Druckkolben oder die Druckkolben in einer radialen Richtung einer Drehachse des zweiten Bremsbestandteils innerhalb der Bremsscheibenelemente angeordnet sind und ein den Druckkolben oder die Druckkolben mit einem der Bremsscheibenelemente verschieblich koppelndes Schiebeelement sowohl in der radialen Richtung als auch in einer axialen Richtung der Drehachse beabstandet zu dem ersten Tragteil angeordnet ist / verläuft. Somit ist das Schiebeelement in Umfangsrichtung überlappungsfrei zu dem ersten Tragteil angeordnet.

Durch diese Ausbildung des Bremssystems findet eine möglichst kompakte Schachtelung von Bremsscheibenelementen mit der Betätigungseinrichtung einerseits statt, andererseits ist der Aufbau möglichst einfach gehalten und die einzelnen Bauteile können besonders robust realisiert werden. Vor allem braucht das Schiebeelement nicht mit Öffnungen zum Durchgriff mit einem der Bremsbestandteile ausgestattet werden, wodurch die Festigkeit des Schiebeelementes und des ersten Tragteils deutlich gesteigert wird. Eine besonders langlebige Ausbildung des entsprechenden Bremssystems ist die Folge.

Weitere vorteilhafte Ausführungen sind mit den Unteransprüchen beansprucht und nachfolgend näher erläutert.

Sind mehrere relativ zueinander (axial) verschiebbare erste Bremsscheibenelemente und/oder zweite Bremsscheibenelemente vorgesehen, ist ein hohes Bremsmoment erzeugbar.

Als besonders zweckmäßig hat es sich herausgestellt, wenn zwei erste Bremsscheibenelemente und ein axial zwischen den beiden ersten Bremsscheibenelementen angeordnetes zweites Bremsscheibenelement vorhanden sind, sodass ein guter Kompromiss zwischen der vorhandenen Bauteilanzahl und dem erzielbaren Bremsmoment besteht.

Auch von Vorteil ist es, wenn auf einer dem Schiebeelement abgewandten axialen Seite der Gesamtheit aus Bremsscheibenelementen eine Gegendruckplatte angeordnet ist und die Gegendruckplatte unmittelbar an der Außenseite des Radträgerbereiches befestigt (insbesondere axial abgestützt) ist. Dadurch wird der Aufbau weiter vereinfacht.

Ist die Gegendruckplatte in der axialen Richtung durch eine auf dem Radträgerbereich aufgeschraubte Mutter fixiert, ergibt sich eine stabile Abstützung der Gegendruckplatte, sodass ein hohes Bremsmoment im Betrieb erzeugbar ist.

In diesem Zusammenhang ist es zusätzlich von Vorteil, wenn die Gegendruckplatte auch axial an dem ersten Tragteil abgestützt ist. Die Gegendruckplatte ist folglich vorzugsweise unmittelbar axial zwischen dem ersten Tragteil und der Mutter eingespannt. Dadurch wird ein noch einfacherer Aufbau erzielt.

Ist ein den oder die Druckkolben aufnehmendes Zylindergehäuse unmittelbar an dem Flanschbereich befestigt, wird die Montage zusätzlich erleichtert.

Der vorhandene Bauraum wird noch intensiver genutzt, wenn eine das Schiebeelement von den Bremsscheibenelementen wegdrückende Vorspannfeder axial zwischen dem Schiebeelement und dem ersten Tragteil eingesetzt / eingespannt ist.

Hinsichtlich der weiteren Ausbildung der Bremsscheibenelemente ist es zudem vorteilhaft, wenn das zumindest eine erste Bremsscheibenelement mit einem Reibbelag ausgestattet ist. Alternativ hierzu ist jedoch auch möglich, das zweite Bremsscheibenelement mit einem Reibbelag (je erstem Bremsscheibenelement) auszustatten.

Besonders bevorzugt ist das zweite Bremsscheibenelement als reine einteilige Stahlplatte realisiert und das, zumindest eine erste Bremsscheibenelement, vorzugsweise die beiden ersten Bremsscheibenelemente jeweils, mit einem Stahlkörper und dem darauf zu dem zweiten Bremsscheibenelement hin aufgebrachten Reibbelag ausgestattet.

Um eine möglichst kompakte Schachtelung mit einem Elektromotor zu ermöglichen, ist es des Weiteren vorteilhaft, wenn ein Wärmeschutzschild radial außerhalb der Bremsscheibenelemente gehäusefest angebracht ist.

Des Weiteren betrifft die Erfindung eine elektrische Radantriebseinheit (Radnabenantriebseinheit) für ein Elektrofahrzeug, wobei diese Radantriebseinheit mit einer Radfelge, einem in der Radfelge aufgenommenen Elektromotor und einem erfindungsgemäßen Bremssystem nach zumindest eine der zuvor beschriebenen Ausführungen ausgestattet ist, wobei der zweite Bremsbestandteil direkt oder indirekt mit der Radfelge drehgekoppelt ist.

In diesem Zusammenhang ist es besonders zweckmäßig, wenn der zweite Bremsbestandteil indirekt über ein Getriebe, besonders bevorzugt ein Planetengetriebe, mit der Radfelge drehgekoppelt ist.

Des Weiteren ist es zweckmäßig, wenn der Elektromotor axial und/oder radial (vorzugsweise mit seinem Stator) versetzt zu dem Bremssystem angeordnet ist. Dadurch ergibt sich eine kompakte leistungsfähige Radantriebseinheit.

In anderen Worten ausgedrückt, ist somit eine vorzugsweise vollflächige Mehrkolbenbremse (Bremssystem) für eine E-Wheel-Applikation in einem durchgriffsfreien Design realisiert. Der Innenlamellenträger (erstes Tragteil) und die Anpressplatte (Gegendruckplatte) sind nun an dem Radträger (Radträgerbereich) befestigt. Betätigungsgehäuse (Zylindergehäuse) und Betätigungselemente (Druckkolben) sind am Radträgerflansch (Flanschbereich) angeordnet. Der Kraftfluss geht über eine Mutter über den Radträger auf den Flansch (Flanschbereich).

Die Erfindung wird nachfolgend anhand von Figuren näher erläutert, in welchem Zusammenhang auch prinzipiell verschiedene Ausführungsbeispiele beschrieben sind.

Es zeigen:
- Fig. 1: eine Längsschnittdarstellung eines erfindungsgemäßen Bremssystems nach einem bevorzugten Ausführungsbeispiel,
- Fig. 2: eine perspektivische Explosionsdarstellung des Bremssystems nach Fig. 1, sowie
- Fig. 3: eine perspektivische Teilschnittansicht einer das Bremssystem aufweisenden Radantriebseinheit, wobei das Bremssystem lediglich schematisch dargestellt ist und der prinzipielle Aufbau der Radantriebseinheit verdeutlicht ist.

Die Figuren sind lediglich schematischer Natur und dienen ausschließlich dem Verständnis der Erfindung. Die gleichen Elemente sind mit denselben Bezugszeichen versehen.

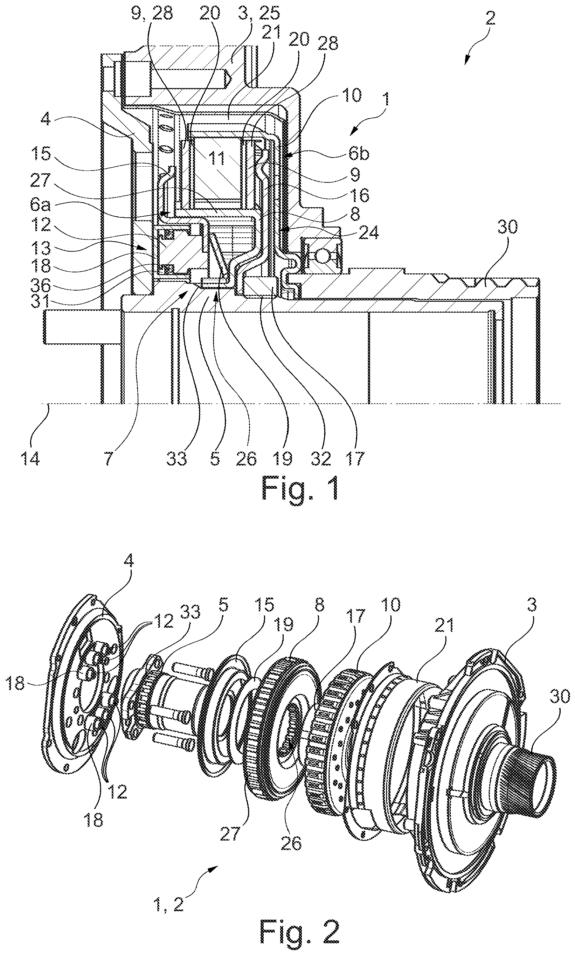

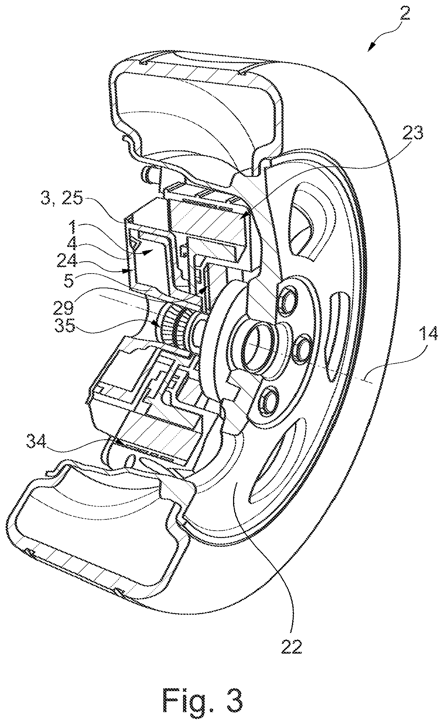

In Fig. 1 ist der nähere Aufbau des erfindungsgemäßen Bremssystems 1 zu erkennen. Mit Fig. 3 ist zudem der bevorzugte Einsatzbereich dieses Bremssystems 1 veranschaulicht. Das in Fig. 3 lediglich schematisch dargestellte Bremssystem 1 ist gemäß einer bevorzugten Ausführung in einer elektrischen Radantriebseinheit 2 integriert. Die Radantriebseinheit 2 stellt eine Radnabenantriebseinheit 2 dar, wobei sowohl das Bremssystem 1 als auch ein den Antrieb bereitstellender Elektromotor 23 innerhalb einer Radfelge 22 für ein Elektrofahrzeug integriert sind. Die Radfelge 22 ist im Betrieb auf typische Weise über eine Radnabe an einem fahrzeugrahmenfest angebrachten Gehäuse 3 gelagert. Die Radfelge 22 ist über ein zentrales Lager 35 relativ zu dem Gehäuse 3 gelagert.

Die nachfolgenden Richtungsbezeichnungen axial, radial sowie in Umfangsrichtung beziehen sich auf eine zentrale Drehachse 14 der Radfelge 22 / eines zweiten Bremsbestandteils 6b des Bremssystems 1. Unter axialer Richtung ist folglich eine Richtung entlang der Drehachse 14, unter radialer Richtung eine Richtung senkrecht zu der Drehachse 14 und in Umfangsrichtung eine Richtung entlang einer konzentrisch um die Drehachse 14 herum verlaufenden Kreislinie zu verstehen.

Zurückkommend auf Fig. 1 ist die Ausbildung des Gehäuses 3 des Bremssystems 1 / der Radantriebseinheit 2 im Bereich des Bremssystems 1 detailliert zu erkennen. Das Gehäuse 3 ist bei der nachfolgenden Beschreibung dem Bremssystem 1 zugeordnet, es ist jedoch prinzipiell auch gleichzeitig das Gehäuse 3 der Radantriebseinheit 2 und nimmt demnach in einem weiteren Bereich den Elektromotor 23 (inklusive einer Flüssigkeits-Kühleinrichtung 34 für den Elektromotor 23) mit auf. Das Gehäuse 3 bildet einen in Fig. 1 zu erkennenden Aufnahmeraum 24 für die Bestandteile des Bremssystems 1 aus. Der Aufnahmeraum 24 ist zu einer ersten axialen Seite hin durch einen Flanschbereich 4 in Form eines deckelförmigen Flanschelementes begrenzt. Zu seiner radialen Innenseite ist der Aufnahmeraum 24 durch einen wellenartigen / zapfenartigen Radträgerbereich 5 begrenzt. Der Radträgerbereich 5 ist fest mit dem Flanschbereich 4 verbunden. Der Radträgerbereich 5 bildet somit unmittelbar das Gehäuse 3 mit aus, das, wie bereits erwähnt, im Betrieb fahrzeugrahmenfest angebracht ist. Der Radträgerbereich 5 ist separat von dem Flanschbereich 4 ausgeformt. Zu einer radialen Außenseite sowie einer dem Flanschbereich 4 abgewandten zweiten axialen Seite ist der Aufnahmeraum 24 durch ein sich in axialer Richtung sowie in radialer Richtung verlaufendes Hauptgehäuseteil 25 begrenzt.

In dem Aufnahmeraum 24 ist ein erster Bremsbestandteil 6a gehäusefest, d. h. fest mit dem Gehäuse 3 und somit im Betrieb fahrzeugrahmenfest angebracht. Mit dem ersten Bremsbestandteil 6a wirkt der zweite Bremsbestandteil 6b zusammen, der im Betrieb rotatorisch mit der Radfelge 22 gekoppelt ist und in einem Bremszustand der Radantriebseinheit 2 reibkraftschlüssig mit dem ersten Bremsbestandteil 6a zur Abbremsung der Radfelge 22 verbunden ist.

Die beiden Bremsbestandteile 6a, 6b weisen jeweils ein Tragteil 8, 10 sowie mindestens ein Bremsscheibenelement 9, 11, das mit dem jeweiligen Tragteil 8, 10 verbunden ist, auf. Demnach weist der erste Bremsbestandteil 6a ein erstes Tragteil 8 auf, das auch als Innenträger/ Innenlamellenträger bezeichnet ist. Dieses erste Tragteil 8 ist mit seiner radialen Innenseite unmittelbar an einer radialen Außenseite 7 des Radträgerbereiches 5 angebracht. Hierfür dient bevorzugt eine als Steckverzahnung ausgebildete Verzahnung 26, die die beiden Bestandteile - Radträgerbereich 5 und erstes Tragteil 8 - in Drehrichtung formschlüssig miteinander verbindet. Auf einer der Verzahnung 26 radial abgewandten Seite bildet das erste Tragteil 8 einen Hülsenbereich 27 aus, auf dem zwei erste Bremsscheibenelemente 9 relativ zueinander verschieblich, jedoch drehfest, aufgenommen sind. Die beiden ersten Bremsscheibenelemente 9 sind im Wesentlichen lamellenartig ausgebildet. Die beiden ersten Bremsscheibenelemente 9 weisen einen scheibenförmigen Stahlträger / Stahlkörper 28 sowie einen zu einem zweiten Bremsscheibenelement 11 des zweiten Bremsbestandteils 6b hin angeordneten Reibbelag 20 auf. In axialer Richtung entlang der Drehachse 14 gesehen zwischen den beiden ersten Bremsscheibenelementen 9 ist das zweites Bremsscheibenelement 11 angeordnet. Das zweite Bremsscheibenelement 11 ist an einem als Außenträger / Außenlamellenträger ausgebildeten zweiten Tragteil 10 des zweiten Bremsbestandteils 6b drehfest, jedoch in axialer Richtung verschieblich, aufgenommen.

Der zweite Bremsbestandteil 6b ist auf typische Weise relativ zu dem Gehäuse 3 verdrehbar gelagert. Der zweite Bremsbestandteil 6b ist, wie in Fig. 3 schematisch zu erkennen, über ein Planetengetriebe 29 indirekt mit der Radfelge 22 gekoppelt. Das Planetengetriebe 29 ist ebenfalls in dem Gehäuse 3 aufgenommen. In Fig. 1 ist ein Sonnenrad 30 des Planetengetriebes 29 zu erkennen, welches Sonnenrad 30 fest mit dem zweiten Tragteil 10 verbunden ist.

Zur Betätigung des Bremssystems 1, d.h. zum reibkraftschlüssigen Verbinden der ersten und zweiten Bremsbestandteile 6a, 6b miteinander, ist auf typische Weise eine hydraulische Betätigungseinrichtung 13 vorgesehen. Diese hydraulische Betätigungseinrichtung 13 weist ein Zylindergehäuse 18 auf, das an dem Flanschbereich 4 befestigt ist. Das Zylindergehäuse 18 ist in radialer Richtung außerhalb des Radträgerbereiches 5 angeordnet. Auch ist das Zylindergehäuse 18 in radialer Richtung innerhalb der Bremsscheibenelemente 9, 11 angeordnet. In axialer Richtung verschiebbar in dem Zylindergehäuse 18 sind mehrere in Umfangsrichtung verteilt angeordnete Druckkolben 12 der Betätigungseinrichtung 13 verschiebbar aufgenommen, wie auch in Fig. 2 zu erkennen. Die Druckkolben 12 sind verschiebefest mit einem Schiebeelement 15 gekoppelt und wirken über dieses Schiebeelement verstellend auf die Relativposition der ersten und zweiten Bremsbestandteile 6a, 6b ein. Das Schiebeelement 15 dient somit zum Weiterleiten einer (Brems-)Betätigungskraft im Betrieb.

Das Schiebeelement 15 ist erfindungsgemäß entlang seines Verlaufs durchgriffsfrei zu dem ersten Tragteil 8 angeordnet und folglich über seine Erstreckung im Längsschnitt nach Fig. 1 gesehen in axialer Richtung sowie in radialer Richtung beabstandet zu dem ersten Tragteil 8 angeordnet.

Das Schiebeelement 15 verläuft von einem druckkolbenseitigen Ende in radialer Richtung nach außen und ist mit einem radial außenliegenden Ende in radialer Richtung auf gleicher Höhe mit den Bremsscheibenelementen 9, 11 angeordnet. Somit ist das Schiebeelement 15 derart ausgeformt, dass es im Betrieb eine durch einen Hydraulikdruck an den Druckkolben 12 erzeugte Bremskraft auf ein endseitig angeordnetes Bremsscheibenelement aus der Gesamtheit an ersten und zweiten Bremsscheibenelementen 9, 11, hier eines der ersten Bremsscheibenelemente 9, überträgt. Bei Ansteuerung der Betätigungseinrichtung 13 wird somit ein zwischen dem Zylindergehäuse 18 und dem Druckkolben 12 ausgebildeter (mit Dichtung 36 abgedichteter) Druckraum 31 mit Hydraulikdruck beaufschlagt, sodass die Druckkolben 12 in axialer Richtung ausfahren. Dadurch wird das Schiebeelement 15 gegen die Bremsscheibenelemente 9, 11 gedrückt und diese gelangen in reibkraftschlüssigen Kontakt miteinander.

Zur Abstützung der durch die Betätigungseinrichtung 13 erzeugten Bremskraft / Betätigungskraft ist auf einer dem Schiebeelement 15 axial abgewandten Seite in Bezug auf die Gesamtheit der ersten und zweiten Bremsscheibenelemente 9, 11 eine Gegendruckplatte 16 vorgesehen. Die Gegendruckplatte 16 ist auf einer den Druckkolben 12 axial abgewandten Seite des ersten Tragteils 8 angeordnet. Hierbei ist zu erkennen, dass die Gegendruckplatte 16 zu ihrer radialen Innenseite ebenfalls an der Außenseite 7 des Radträgerbereiches 5 fixiert ist. In dieser Ausführung dient eine Mutter 17, die auf einem (Außen-)Gewinde 32 des Radträgerbereiches 5 aufgeschraubt ist, zur axialen Fixierung der Gegendruckplatte 16. Insbesondere ist die Gegendruckplatte 16 in axialer Richtung zwischen dem ersten Tragteil 8 und der Mutter 17 fixiert. Des Weiteren ist das erste Tragteil 8 zwischen der Gegendruckplatte 16 und einem radialen Absatz 33 des Radträgerbereiches 5 fixiert.

Auch ist in Fig. 1 gut zu erkennen, dass radial außerhalb der beiden Bremsbestandteile 6a, 6b ein Wärmeschutzschild 21 angebracht ist. Das Wärmeschutzschild 21 erstreckt sich im Aufnahmeraum 24 in axialer Richtung über die gesamte Länge des ersten Bremsbestandteils 6a sowie über den Großteil des zweiten Bremsbestandteils 6b. Das Wärmeschutzschild 21 bedeckt die Bremsscheibenelemente 9, 11 radial von außen.

Zur Abstützung der Betätigungseinrichtung 13 in einer Ausgangsstellung, die einer geöffneten Stellung des Bremssystems 1 entspricht, ist eine Vorspannfeder 19 vorgesehen. Die Vorspannfeder 19 ist in dieser Ausführung unmittelbar axial zwischen dem Schiebeelement 15 und dem ersten Tragteil 8 sowie radial innerhalb der Bremsscheibenelemente 9, 11 angeordnet.

Der Vollständigkeit halber sei zudem darauf hingewiesen, dass die Bremsscheibenelemente 9, 11 auch auf umgekehrte Art und Weise umgesetzt sein können. Demnach ist es prinzipiell auch möglich, nicht die ersten Bremsscheibenelemente 9, sondern das zweite Bremsscheibenelement 11 mit einem Reibbelag 20 zu dem jeweiligen ersten Bremsscheibenelement 9 hin zu versehen.

In anderen Worten ausgedrückt, ist die erfindungsgemäße Anordnung dadurch gekennzeichnet, dass der Innenlamellenträger 8 (mit Hilfe einer Verzahnung 26 (o.ä.)) und die Anpressplatte 16 direkt am Radträger 5 angebracht werden, während das Betätigungsgehäuse (Zylindergehäuse 18) sowie die Betätigungselemente (Schiebeelement 15, Druckkolben 12 und Dichtung 36) am Radträgerflansch 4 befestigt werden. Wie in Fig. 1 zu erkennen ist, werden der Innenlamellenträger 8 und die Anpressplatte 16 mit einer Mutter 17 auf dem Radträger 5 fixiert. Die Betätigungskraft über das Lamellenpaket (erste Bremsscheibenelemente 9 (mit Stahlkörper 28 und Reibbelag 20) sowie zweites Bremsscheibenelement 11) wird über diese Mutter 17 abgestützt. Das Bremsmoment wird über die Welle (Sonnenrad 30) kommend vom Planetensatz eingeleitet, von dort auf den Außenlamellenträger 10, dann auf das Lamellenpaket 9, 11 und den Innenlamellenträger 8 übertragen, der sich auf dem Radträger 5 abstützt. Die Betätigungskraft wird hydraulisch über die Betätigungselemente 12, 15, 36 erzeugt, mit Hilfe des Drucktopfes (Schiebeelement 15) auf das Lamellenpaket 9, 11 übertragen und an der Anpressplatte 16 abgestützt. Von dort geht der Kraftfluss auf die Mutter 17 über den Radträger 5 zum Radträgerflansch 4. Das Rückstellelement (Vorspannfeder 19) hält die Lamellen 9, 11 im unbetätigten Zustand offen. In Fig. 2 sind die Komponenten in der entsprechenden Montagereihenfolge zu sehen. Es lässt sich erkennen, dass die Bauteile 8 und 15 deutlich robuster (ohne Durchgriffe) ausgeführt sind. Generell sind sowohl ein Ein- als auch ein Mehrscheibenkonzept denkbar sowie mitdrehende oder stehende Beläge und/oder Stahlmassen.

### Bezugszeichenliste

- 1: Bremssystem
- 2: Radantriebseinheit
- 3: Gehäuse
- 4: Flanschbereich
- 5: Radträgerbereich
- 6a: erster Bremsbestandteil
- 6b: zweiter Bremsbestandteil
- 7: Außenseite
- 8: erstes Tragteil
- 9: erstes Bremsscheibenelement
- 10: zweites Tragteil
- 11: zweites Bremsscheibenelement
- 12: Druckkolben
- 13: Betätigungseinrichtung
- 14: Drehachse
- 15: Schiebeelement
- 16: Gegendruckplatte
- 17: Mutter
- 18: Zylindergehäuse
- 19: Vorspannfeder
- 20: Reibbelag
- 21: Wärmeschutzschild
- 22: Radfelge
- 23: Elektromotor
- 24: Aufnahmeraum
- 25: Hauptgehäuseteil
- 26: Verzahnung
- 27: Hülsenbereich
- 28: Stahlkörper
- 29: Planetengetriebe
- 30: Sonnenrad
- 31: Druckraum
- 32: Gewinde
- 33: Absatz
- 34: Kühleinrichtung
- 35: Lager
- 36: Dichtung

## Patentansprüche

1. Bremssystem (1) für eine elektrische Radantriebseinheit (2), mit einem fahrzeugrahmenfest anbringbaren Gehäuse (3), welches Gehäuse (3) einen Flanschbereich (4) sowie einen an dem Flanschbereich (4) befestigten, wellenartigen Radträgerbereich (5) aufweist, einem mit dem Gehäuse (3) verbundenen ersten Bremsbestandteil (6a), wobei der erste Bremsbestandteil (6a) ein unmittelbar an einer radialen Außenseite (7) des Radträgerbereiches (5) angebrachtes erstes Tragteil (8) sowie ein drehfest mit dem ersten Tragteil (8) verbundenes erstes Bremsscheibenelement (9) aufweist, einem relativ zu dem Gehäuse (3) drehbar gelagerten zweiten Bremsbestandteil (6b), wobei der zweite Bremsbestandteil (6b) ein zweites Tragteil (10) sowie ein drehfest mit dem zweiten Tragteil (10) verbundenes, zum reibkraftschlüssigen Verbund mit dem ersten Bremsscheibenelement (9) angeordnetes und ausgebildetes, zweites Bremsscheibenelement (11) aufweist, sowie einer hydraulischen, mit wenigstens einem oder mehreren Drucckolben (12) ausgestatteten Betätigungseinrichtung (13), **dadurch gekennzeichnet dass** die Betätigungseinrichtung (13) derart angeordnet ist, dass die Druckkolben (12) in einer radialen Richtung einer Drehachse (14) des zweiten Bremsbestandteils (6b) innerhalb der Bremsscheibenelemente (9, 11) angeordnet sind und ein den einen oder die mehreren Druckkolben (12) mit einem der Bremsscheibenelemente (9, 11) verschieblich koppelndes Schiebeelement (15) sowohl in der radialen Richtung als auch in einer axialen Richtung der Drehachse (14) beabstandet zu dem ersten Tragteil (8) angeordnet ist.

2. Bremssystem (1) nach Anspruch 1, **dadurch gekennzeichnet, dass** mehrere relativ zueinander verschiebbare erste Bremsscheibenelemente (9) und/oder zweite Bremsscheibenelemente (11) vorgesehen sind.

3. Bremssystem (1) nach Anspruch 1 oder 2, **dadurch gekennzeichnet, dass** auf einer dem Schiebeelement (15) abgewandten axialen Seite der Gesamtheit aus Bremsscheibenelementen (9, 11) eine Gegendruckplatte (16) angeordnet ist und die Gegendruckplatte (16) unmittelbar an der Außenseite (7) des Radträgerbereiches (5) befestigt ist.

4. Bremssystem (1) nach Anspruch 3, **dadurch gekennzeichnet, dass** die Gegendruckplatte (16) in der axialen Richtung durch eine auf dem Radträgerbereich (5) aufgeschraubte Mutter (17) fixiert ist.

5. Bremssystem (1) nach Anspruch 3 oder 4, **dadurch gekennzeichnet, dass** die Gegendruckplatte (16) axial an dem ersten Tragteil (8) abgestützt ist.

6. Bremssystem (1) nach einem der Ansprüche 1 bis 5, **dadurch gekennzeichnet, dass** ein den einen oder die mehreren Druckkolben (12) aufnehmendes Zylindergehäuse (18) unmittelbar an dem Flanschbereich (4) befestigt ist.

7. Bremssystem (1) nach einem der Ansprüche 1 bis 6, **dadurch gekennzeichnet, dass** eine das Schiebeelement (15) von den Bremsscheibenelementen (9, 11) wegdrückende Vorspannfeder (19) axial zwischen dem Schiebeelement (15) und dem ersten Tragteil (8) eingesetzt ist.

8. Bremssystem (1) nach einem der Ansprüche 1 bis 7, **dadurch gekennzeichnet, dass** das erste Bremsscheibenelement (9) oder das zweite Bremsscheibenelement (11) mit einem Reibbelag (20) ausgestattet ist.

9. Bremssystem (1) nach einem der Ansprüche 1 bis 8, **dadurch gekennzeichnet, dass** ein Wärmeschutzschild (21) radial außerhalb der Bremsscheibenelemente (9, 11) gehäusefest angebracht ist.

10. Elektrische Radantriebseinheit (2) für ein Elektrofahrzeug, mit einer Radfelge (22), einem in der Radfelge (22) aufgenommenen Elektromotor (23) und einem Bremssystem (1) nach einem der Ansprüche 1 bis 9, wobei der zweite Bremsbestandteil (6b) direkt oder indirekt mit der Radfelge (22) drehgekoppelt ist.

## Claims

1. A brake system (1) for an electric wheel drive unit (2), comprising a housing (3) that can be attached securely to the vehicle frame, said housing (3) having a flange region (4) and a shaft-type wheel carrier region (5) secured to the flange region (4); a first brake component (6a) connected to the housing (3), wherein the first brake component (6a) has a first support part (8) attached directly on a radial outer side (7) of the wheel carrier region (5) and a first brake disc element (9) rotationally fixed to the first support part (8), a second brake component (6b) rotatably mounted relative to the housing (3), wherein the second brake component (6b) has a second support part (10) and a second brake disc element (11) which is rotationally fixed to the second support part (10) and which is designed and arranged for a frictional connection with the first brake disc element (9), as well as a hydraulic actuation device (13) provided with at least one or more pressure pistons (12), **characterised in that** the actuation device (13) is arranged in such a way that the pressure pistons (12) are arranged within the brake disc elements (9, 11) in a radial direction of an axis of rotation (14) of the second brake component (6b), and a sliding element (15), moveably coupling the one or more pressure pistons (12) with one of the brake disc elements (9, 11), is arranged at a distance from the first support part (8) both in the radial direction and in an axial direction of the axis of rotation (14).

2. The brake system (1) according to claim 1, **characterised in that** a plurality of first brake disc elements (9) and/or second brake disc elements (11) that can be moved relative to one another are provided.

3. The brake system (1) according to claim 1 or 2, **characterised in that** a counterpressure plate (16) is arranged on an axial side of the assembly of brake disc elements (9, 11) facing away from the sliding element (15) and the counterpressure plate (16) is secured directly on the outer side (7) of the wheel carrier region (5).

4. The brake system (1) according to claim 3, **characterised in that** the counterpressure plate (16) is fixed in the axial direction by a nut (17) screwed onto the wheel carrier region (5).

5. The brake system (1) according to claim 3 or 4, **characterised in that** the counterpressure plate (16) is axially supported on the first support part (8).

6. The brake system (1) according to one of claims 1 to 5, **characterised in that** a cylinder housing (18) receiving the one or more pressure pistons (12) is secured directly to the flange region (4).

7. The brake system (1) according to one of claims 1 to 6, **characterised in that** a pretensioning spring (19) pushing the sliding element (15) away from the brake disc elements (9, 11) is inserted axially between the sliding element (15) and the first support part (8).

8. The brake system (1) according to one of claims 1 to 7, **characterised in that** the first brake disc element (9) or the second brake disc element (11) is equipped with a friction lining (20).

9. The brake system (1) according to one of claims 1 to 8, **characterised in that** a thermal protection shield (21) is attached to the housing radially outside of the brake disc elements (9, 11).

10. An electric wheel drive unit (2) for an electric vehicle, comprising a wheel rim (22), an electric motor (23) accommodated in the wheel rim (22) and a brake system (1) according to one of claims 1 to 9, wherein the second brake component (6b) is directly or indirectly rotationally coupled with the wheel rim (22).

## Revendications

1. Système de frein (1) destiné à une unité d'entraînement de roue électrique (2), comprenant un boîtier (3) qui peut être monté sur le châssis du véhicule, lequel boîtier (3) comporte une zone de bride (4) et une zone de support de roue (5) en forme d'arbre fixée à la zone de bride (4), un premier élément de frein (6a) relié au boîtier (3), le premier élément de frein (6a) comportant une première partie de support (8) fixée directement à un côté extérieur radial (7) de la zone de support de roue (5) et un premier élément de disque de frein (9) relié solidairement en rotation à la première partie de support (8), un second élément de frein (6b) monté de manière rotative par rapport au boîtier (3), le second élément de frein (6b) comportant une seconde partie de support (10) et un second élément de disque de frein (11) qui est relié solidairement en rotation à la seconde partie de support (10) et qui est disposé et conçu pour être relié par friction au premier élément de disque de frein (9), ainsi qu'un dispositif d'actionnement hydraulique (13) équipé d'au moins un ou de plusieurs pistons de compression (12), **caractérisé en ce que** le dispositif d'actionnement (13) est disposé de telle sorte que les pistons de compression (12) soient disposés dans une direction radiale d'un axe de rotation (14) du second élément de frein (6b) à l'intérieur des éléments de disque de frein (9, 11) et un élément coulissant (15), accouplant de manière coulissante le ou les pistons de compression (12) à l'un des éléments de disque de frein (9, 11), est disposé à une distance de la première partie de support (8) à la fois dans la direction radiale et dans une direction axiale de l'axe de rotation (14).

2. Système de frein (1) selon la revendication 1, **caractérisé en ce que** plusieurs premiers éléments de disque de frein (9) et/ou seconds éléments de disque de frein (11) pouvant coulisser les uns par rapport aux autres sont prévus.

3. Système de frein (1) selon la revendication 1 ou 2, **caractérisé en ce que**, sur un côté axial à l'opposé de l'élément coulissant (15) de la totalité des éléments de disque de frein (9, 11), une plaque de contre-pression (16) est disposée et la plaque de contre-pression (16) est fixée directement sur le côté extérieur (7) de la zone de support de roue (5).

4. Système de frein (1) selon la revendication 3, **caractérisé en ce que** la plaque de contre-pression (16) est fixée dans la direction axiale par un écrou (17) vissé sur la zone de support de roue (5).

5. Système de frein (1) selon la revendication 3 ou 4, **caractérisé en ce que** la plaque de contre-pression (16) est supportée axialement sur la première partie de support (8).

6. Système de frein (1) selon l'une quelconque des revendications 1 à 5, **caractérisé en ce qu'**un boîtier cylindrique (18) logeant le piston ou la pluralité de pistons de compression (12) est fixé sur la zone de bride (4).

7. Système de frein (1) selon l'une quelconque des revendications 1 à 6, **caractérisé en ce qu'**un ressort de précontrainte (19) repoussant l'élément coulissant (15) des éléments de disque de frein (9, 11) est inséré axialement entre l'élément coulissant (15) et la première partie de support (8).

8. Système de frein (1) selon l'une quelconque des revendications 1 à 7, **caractérisé en ce que** le premier élément de disque de frein (9) ou le second élément de disque de frein (11) est équipé d'une garniture de friction (20).

9. Système de frein (1) selon l'une quelconque des revendications 1 à 8, **caractérisé en ce qu'**un bouclier de protection thermique (21) est monté sur le boîtier radialement à l'extérieur des éléments de disque de frein (9, 11).

10. Unité d'entraînement de roue électrique (2) pour un véhicule électrique, comprenant une jante de roue (22), un moteur électrique (23) logé dans la jante de roue (22) et un système de frein (1) selon l'une quelconque des revendications 1 à 9, le second élément de frein (6b) étant accouplé de manière rotative, directement ou indirectement, à la jante de roue (22).
